Europäisches Patentamt

European Patent Office

Office européen des brevets

(11) Publication number: **0 444 251 A2**

## EUROPEAN PATENT APPLICATION

(21) Application number: 90122677.9

(22) Date of filing: 27.11.90

(51) Int. Cl.⁵: **G06F 3/033**

(30) Priority: **02.03.90 US 487548**

(43) Date of publication of application:
**04.09.91 Bulletin 91/36**

(84) Designated Contracting States:
**DE FR GB IT**

(71) Applicant: **Hewlett-Packard Company**
**Mail Stop 20 B-O, 3000 Hanover Street**
**Palo Alto, California 94304(US)**

(72) Inventor: **Wurm, Christopher M.**
**2 Queen Lane**
**Landenberg, PA 19350(US)**
Inventor: **Altmayer, Lee H.**
**Box 882**
**Hockessin, DE(US)**
Inventor: **Knipe, Charles R.**
**8 Jonlyn Lane**
**Collegeville, PA 19326(US)**

(74) Representative: **Schoppe, Fritz, Dipl.-Ing.**
**Seitnerstrasse 42**
**W-8023 Pullach bei München(DE)**

(54) **Image oriented method and apparatus for computer control of mechanical devices.**

(57) Computer control of mechanical devices or functional components thereof is accomplished by user interaction with an imaginal depiction of the device on a suitable display screen. In preferred embodiments, the operational status of a supercritical fluid extractor is controlled by pointing to a region on the display screen corresponding to a functional component thereof, triggering a display of the operational status of that component, and modifying that operational status.

_Fig. 1_

EP 0 444 251 A2

## RELATED APPLICATION DATA

This application is related to the subject matter disclosed and claimed in the following commonly assigned, co-pending patent applications:

the design patent application entitled "Icon for Supercritical Fluid Extractor Top Level Display Or The Like", filed herewith, in the name of Wurm, *et al.*;

the design patent application entitled "Icon for Supercritical Fluid Extractor Instrument Status Display Or The Like", filed herewith, in the name of Wurm, *et al.*;

the design patent application entitled "Icon for Supercritical Fluid Extractor Fluid Delivery Display Or The Like", filed herewith, in the name of Wurm, *et al.*; and

the design patent application entitled "Icon for Supercritical Fluid Extractor Fraction Output Display Or The Like", filed herewith, in the name of Wurm, *et al.*

## BACKGROUND OF THE INVENTION

This invention relates to a method and apparatus for computer control of a mechanical device and, more specifically, to a method and apparatus which accomplish such control by user interaction with an imaginal depiction of the device on a video display screen.

It is known in the art to employ a computer or other similar logic device in controlling the operation of a wide variety of mechanical devices, ranging from home appliances to complex industrial equipment systems. A necessary component of such control systems is input means by which the user can direct the operation of the computer and, hence, the operation of the device. Any system which facilitates user implementation of a computer may be broadly defined as a computer/user interface or, more commonly, a user interface. It will be understood that a user interface comprises not only input means but also the images that may appear on a computer display screen and the commands which will implement a subject computer program.

Unfortunately, the operation of many computer systems demand that the user be skilled in the implementation of often complicated protocols and instruction sets. For efficient operation of certain systems, such information must sometimes even be committed to memory. Thus, it will be readily appreciated that one object of computer science and related arts is to create systems which are easy to use and which establish an easily understood dialogue between the computer and user. Accordingly, considerable effort has been devoted to the development of user interfaces which can be implemented with a minimum of user training and memorization.

An exceedingly wide variety of computer interfaces are well known in the art to comprise control panels, keyboards or other types of input systems coupled with video or other types of display screens. One type of user interface presents screen instructions known as prompts to the user at appropriate junctures in the execution of a computer program. Another development for simplifying user interfaces involves organizing often vast sets of instructions into elements known in the art as menus. Instruction sets relating to a related function or group of functions are generally organized into a single menu. The effect of such menu organization is to reduce the extent to which a user must commit to memory the instructions, routines, and subroutines associated with a computer program.

In operating many computer-controlled devices, alphanumeric screen messages prompt the user to perform required actions by executing a particular keyboard keystroke, pointing and clicking a mouse, or even by pressing lighted targets on the display screen. In some systems, menus of operating parameters are displayed on a display screen as the operator continues through various levels of the programming process. Unfortunately, however, proper use of interfaces such as this are highly dependent upon the user's facility English or some other alphanumeric language or code.

Thus, more recent developments in user interfaces have introduced images to the operator of computer directed machines in addition to alphanumeric information. Many such interfaces employ icons descriptive of machine functions in addition to alphanumeric text. For example, arrows are provided on display screens in some interfaces where machine parameters can be increased or decreased. A machine parameter of interest might, for example, be increased by pointing to an upwardly directed arrow associated with that parameter and then clicking the mouse. Sometimes, more fanciful icons are provided on the display screen of a user interface to simplify its operation. For example, it is known for computer word processing programs to provide an imaginal depiction of a trash can to facilitate the deletion of text. By pointing to the trash can with a computer mouse and then clicking the mouse, designated blocks of text can in such systems be cleared from the display screen.

Unfortunately, however, even user interfaces which incorporate icons or other symbolic images often employ considerable amounts of alphanumeric information. While the extent to which the implementation of such systems depends upon alphanumeric information is indeed lessened, the user must to a considerable degree still be skilled in the proper employment of such information. It would be quite difficult for an individual not familiar with the particular language in which such information is employed to use the subject mechanical device.

It would therefore be of great advantage to provide user interfaces for operating mechanical devices which are even less reliant upon the user's capacity to comprehend alphanumeric information than those presently known in the art.

## SUMMARY OF THE INVENTION

It is an object of the present invention to provide a method and apparatus for controlling the operation of mechanical devices.

It is another object to provide a method and apparatus which employ computers or other logic devices in controlling mechanical device.

It is a further object to provide such a method and apparatus in the form of a computer/user interface.

It is yet another object to provide a user interface for controlling the operation of a mechanical device, which interface is minimally dependent upon its user's capacity to comprehend alphanumeric information.

These and other objects are accomplished by the present invention, which provides a method and apparatus for controlling the operation of a mechanical device having one or more functional components by reference to an imaginal depiction of the device on a display screen. In certain embodiments, the method comprises displaying an imaginal depiction of the device on a display screen, pointing to a region on the display screen corresponding to a selected functional component of the device, triggering a display of the operational status for the selected functional component, and modifying this operational status.

In a preferred embodiment, the method comprises displaying an imaginal depiction of a supercritical fluid extractor on a display screen, pointing with a computer mouse to a region on the display screen corresponding to a functional component such as the extractor's extraction chamber, triggering a display of the operational status for the extraction chamber by clicking a button on the mouse, and modifying this operational status, such as by increasing the chamber's temperature.

## BRIEF DESCRIPTION OF THE DRAWINGS

Figure 1 shows an apparatus according to the present invention for computer control of a supercritical fluid extractor.

Figure 2 shows a computer display screen bearing an imaginal depiction of a supercritical fluid extractor.

Figure 3 shows a computer display screen bearing alphanumeric and imaginal information relating to extraction fluids employed in a supercritical fluid extractor.

Figure 4 shows a computer display screen bearing an imaginal depiction of a supercritical fluid extractor's operational status.

Figure 5 shows a computer display screen bearing alphanumeric and imaginal information relating to sample entry (login) in a supercritical fluid extractor.

Figure 6 shows a computer display screen bearing alphanumeric and imaginal information relating to the extraction chamber of a supercritical fluid extractor.

Figure 7 shows a computer display screen bearing alphanumeric and imaginal information relating to fluid delivery in a supercritical fluid extractor.

Figure 8 shows a computer display screen bearing alphanumeric and imaginal information relating to setpoints in a supercritical fluid extractor.

Figure 9 is a flowchart illustrating the method of the present invention.

## DESCRIPTION OF PREFERRED EMBODIMENTS

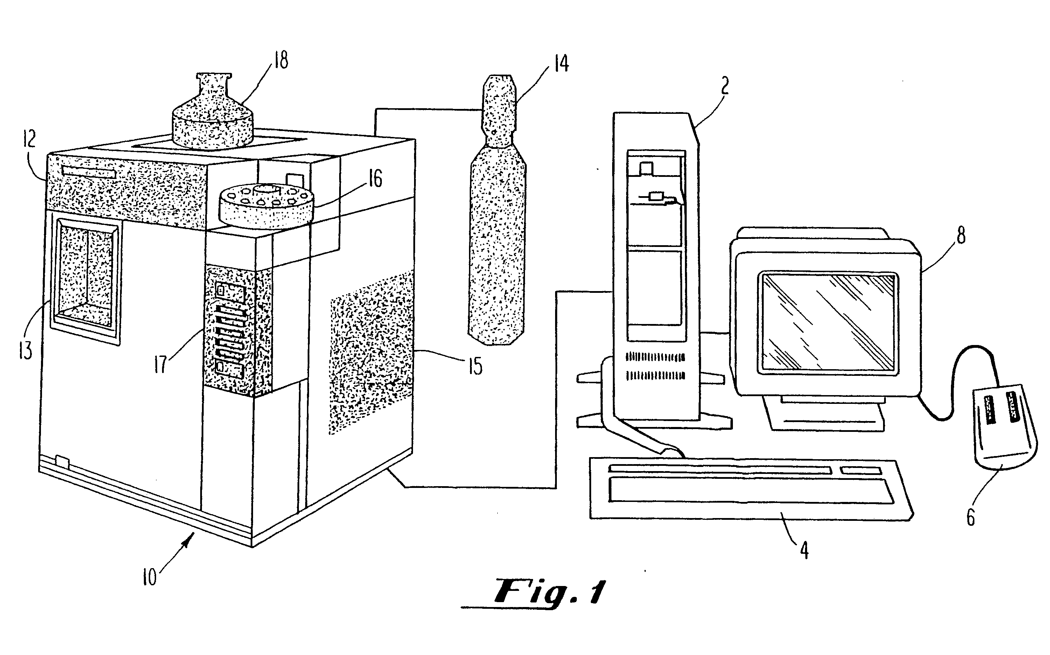

Figure 1 shows an apparatus suitable for image-oriented computer control of a mechanical device. Thus, a supercritical fluid extractor (10) is provided and connected by communication means to a personal computer (2). It is preferred that the supercritical fluid extractor comprise functional components such as an analyte trap (12), an extraction chamber (13), extraction fluids (14), fluid delivery means (15), fraction output means (16), a keyboard (17), and rinse solvents (18).

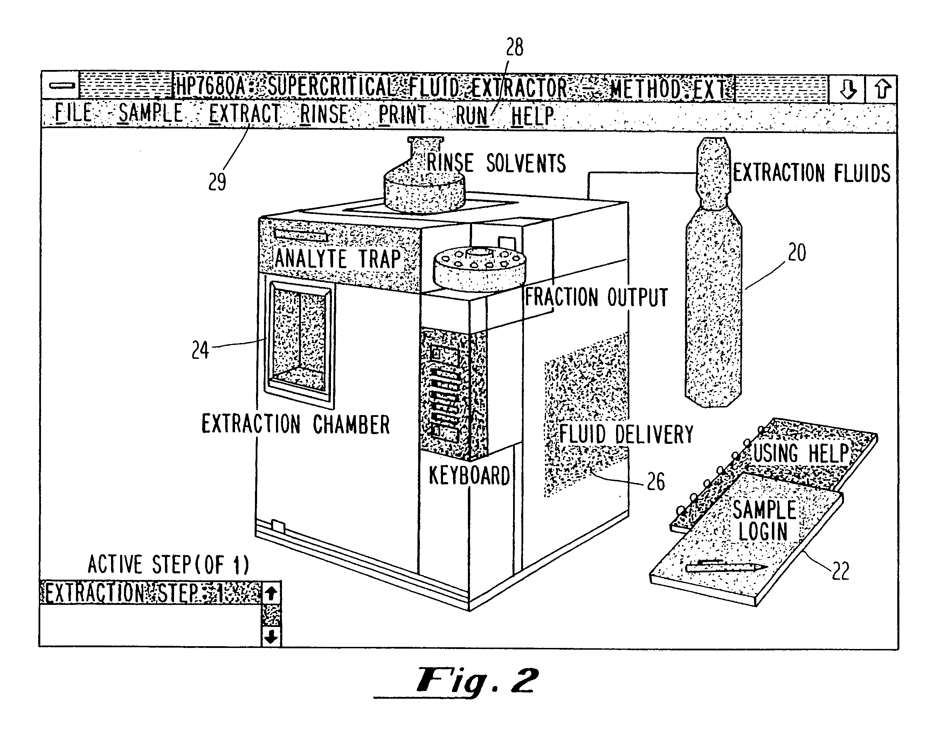

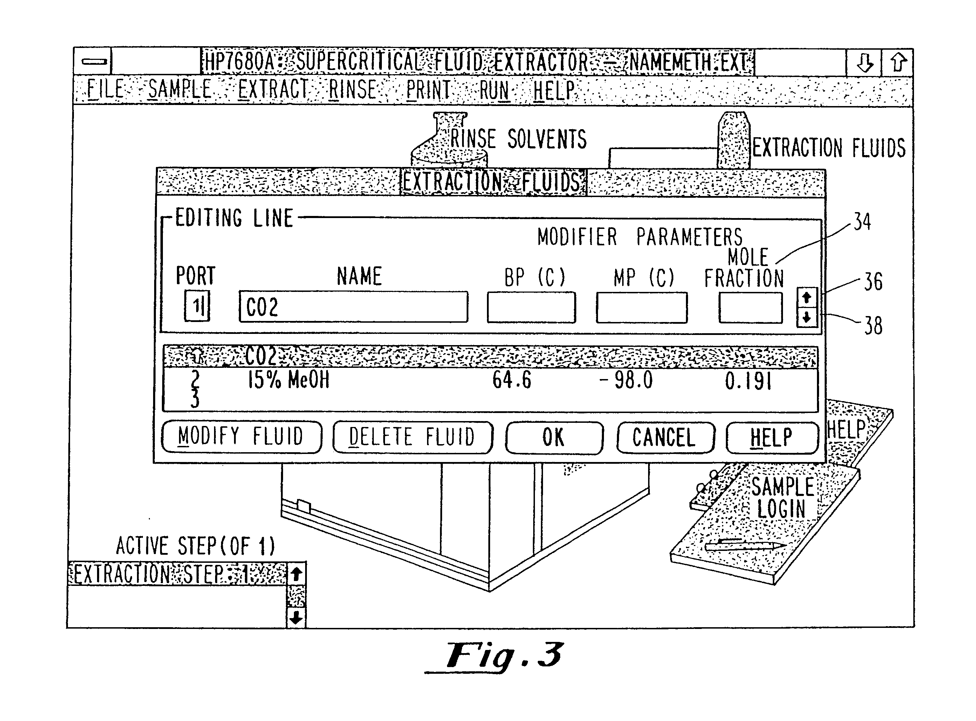

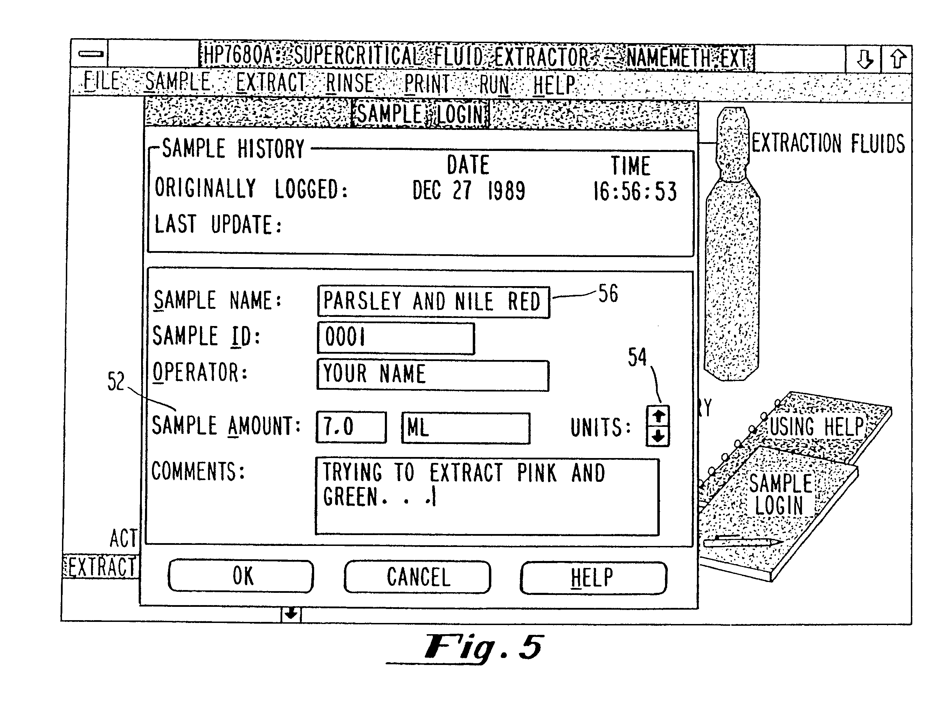

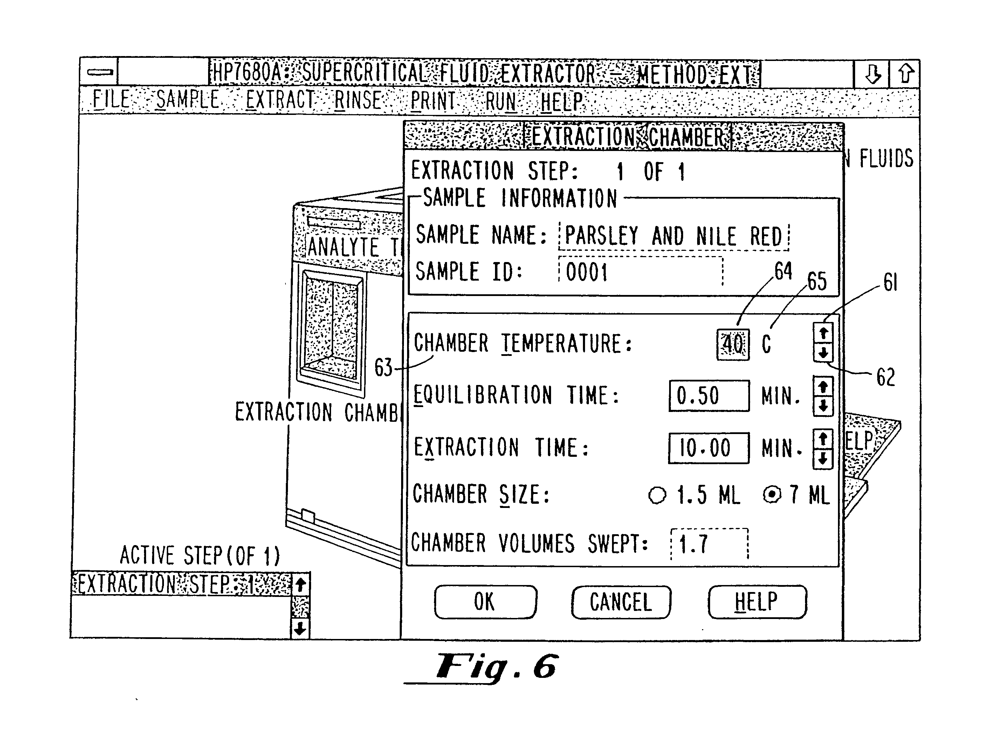

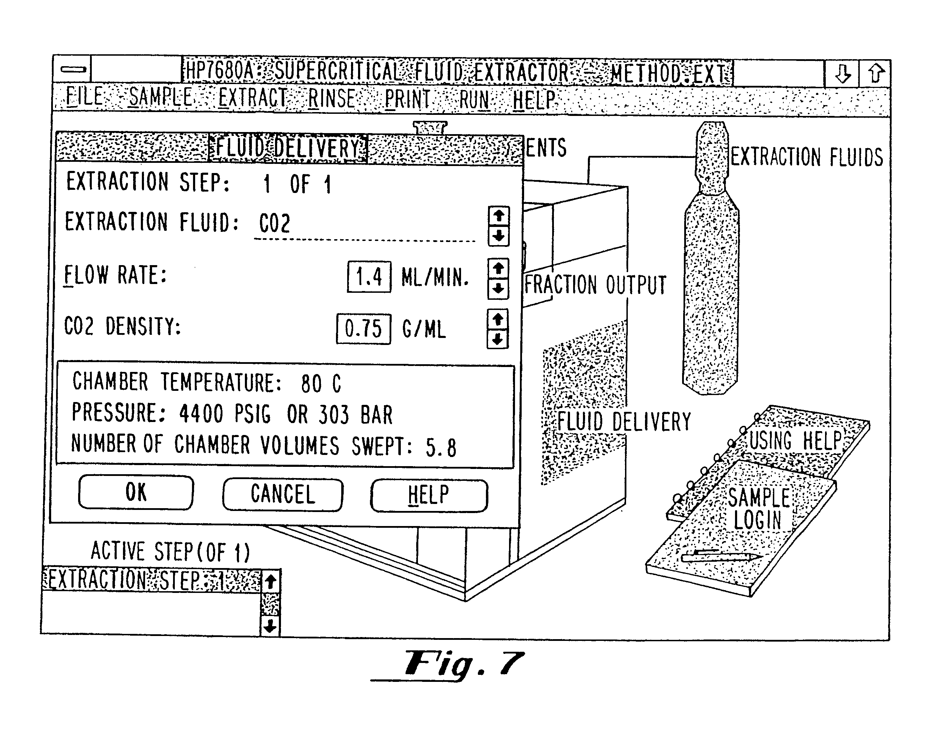

The computer is, in turn, connected to input means such as a keyboard (4) and a computer mouse (6) and to a video display terminal (8) upon which various screen displays representative of the operation of the supercritical fluid extractor and its functional components are shown. In a preferred embodiment, the supercritical fluid extractor is initially displayed on the video terminal as in Figure 2. By pointing to the imaginal depiction of a functional component of interest and performing a triggering operation such as clicking a computer mouse, the operational status of that functional component is displayed. Thus, by pointing to the shaded portion depicting the extraction fluids (20) and thereupon clicking a mouse, operational status such as in Figure 3 will be displayed. Likewise, by pointing to the shaded notebook depicting sample entry (login) (21) and thereupon clicking a mouse, operational status such as in Figure 5 will be displayed. By pointing to the shaded portion depicting the extraction chamber (24) and thereupon clicking a mouse, operational status such as in Figure 6 will be displayed. By pointing to the shaded portion depicting the fluid delivery means (26) and thereupon clicking a mouse, operational status of such as in Figure 7 will be displayed.

Upon such display, the operational status for a functional component -- and, hence, for the device -- can be altered by various means. For example, an operator of the supercritical fluid extractor may raise the temperature of the extraction chamber when the selected extraction step is executed of performed by pointing to the increment arrow (61) in Figure 6 with the computer mouse and thereupon clicking the mouse. In response to such action, drivers in the extractor -- such as heating coils -- then raise the temperature to the appropriate, incrementally higher value.

Once the desired operational status for a given functional component is established, the screen associated with that functional component may be exited, returning to the main display screen bearing the imaginal depiction of the functional component or, possibly, the entire device. From such a screen, the operational status of other functional components may in the same manner be controlled.

A wide variety of mechanical devices can be controlled in accordance with the present invention. The method and apparatus of the present invention are applicable to virtually any device or group of devices whose operation can be directed with the assistance of a computer or other logic device. Thus, the operation of devices such as household appliances, medical instruments, scientific research equipment, and industrial equipment relating to manufacturing, chemical processing, transportation, and the like can be controlled by this invention. It is preferred, however, that the operation of chemical analytical devices be controlled by this invention. Some common examples of chemical analytical devices are gas and liquid chromatographs, ultraviolet, visible, infrared, Raman, fluorescence, absorption, and mass spectrophotometers, and supercritical fluid extractors. It is particularly preferred that the mechanical device controlled be a supercritical fluid extractor.

As will be appreciated by those skilled in the art, mechanical devices controllable in accordance with the present invention can have one or more functional components. It will be understood that a functional component of a device is any portion of the device which performs an identifiable function. For example, the extraction chamber and fluid delivery systems of a supercritical fluid extractor may in certain applications be regarded as functional components thereof.

In accordance with the present invention, an imaginal depiction of the mechanical device to be controlled is projected onto a display screen. Alternatively, where a particular functional component is of interest, the imaginal depiction of that component is so projected. Methods for creating such images on computer display screen are well known in the art. In general, discrete regions of the display screen are associated with certain functional components such that actuation of that region, such as by pointing and clicking a mouse, will execute one or more computer instruction sets or commands. For example, bitmap locations may be defined on the display screen and associated with particular functional components by methods and means well known to those skilled in the art.

One requirement of any such method and means is that the image be created and displayed such that it may be effectively employed in the described manner as a reference point for controlling the depicted mechanical device or functional component thereof. A variety of computer software programs and languages may be employed by those skilled in the art to create an appropriate system in which computer instruction sets may be executed by reference to a well-defined region of the display screen associated with a given functional component, portion, or aspect of the device. It will be understood that computer instruction sets can take various forms and can range from single-word commands to involved software routines and subroutines. It is preferred that the image of the mechanical device or functional component to be controlled in accordance with this invention be created and displayed on the computer display screen using the Microsoft WindowsTM program, in which instruction sets and subroutines directive of the mechanical device are executed by actuation of a computer mouse whose associated cursor is located within that area of the display screen associated with the functional component of interest.

It will be understood that the manner in which a given mechanical device is depicted on the display screen may take various embodiments. For example, it is not necessary that the device be drawn to scale or occupy any set portion of the display screen's area. Likewise, myriad artistic variations are possible, involving such aspects as color, shape, and texture. The only requirement for such depiction is that the functional aspects of the device be distinct and recognizable to the user.

Virtually any type of display screen known in the art is amenable to the practice of the present invention. While liquid crystal displays can be used, cathode ray tubes and other types of video display terminals are preferred. As will be appreciated by those skilled in the art, considerable variation in the quality of a screen-displayed image are possible. These variations are typically attributable to many factors, such as the type of graphics processing means employed. While the highest quality screen display is understandably preferred, the only requirement in this regard is that the image be distinct and recognizable to the user.

Once an imaginal depiction of the subject mechanical device is displayed on a display screen using a suitable computer software program, the operation of said device may be controlled by pointing to a region on the display screen corresponding to a functional component of interest by any of the means well known in the art. There exist numerous means for pointing, including cursors controllable by keyboard keys and computer mice, light pens, and even physical objects such as the human finger brought into contact with the display screen. The only requirement for such pointing means is that they effectively indicate to the processing means the particular portion of the display screen of interest to the user, which portion will have associated therewith one or more functional components of the mechanical device. It is preferred for this invention that a computer mouse be employed as pointing means.

Once the user decides upon a particular functional component to be controlled by pointing to the imaginal depiction thereof, the operational status of that component is controlled. It is intended that the term "control" as it relates to the operational status of mechanical devices comprises altering such status as well as monitoring such status without alteration thereof. Such control may understandably take many forms. For example, a user might initiate the operation of a mechanical device by pointing to the imaginal depiction on a display screen of its power source and then depressing a green key labeled "start". In a preferred embodiment, a display of the operational status of a functional component is triggered by means well known to those skilled in the art concurrently with pointing to that component. For example, such triggering can occur by the depressing one or more keys of a computer keyboard, depressing one or more of the keys of a computer mouse (known as clicking), or even by touching the display screen with a human finger or other physical object. It is preferred that triggering be performed by clicking a mouse.

Thus, in preferred embodiments, where a region of the display screen has been defined and associated with an appropriate device or functional component thereof, pointing to that area of the screen and performing a triggering function such as clicking a mouse will display the operational status of the depicted device or functional component. It is, of course, a prerequisite of such display that the computer system be properly programmed using Microsoft Windows™ or some other analogous software package. The operational status depicted may comprise images, alphanumeric information, or both. For example, in a user interface for a supercritical fluid extractor shown in Figure 2, pointing to the fluid canister (20) with a mouse and clicking the left button on the mouse will trigger display of the operational information shown in Figure 3. As can be seen, Figure 3 comprises alphanumeric information such as the fluid's boiling point (BP) (32) and mole fraction (34) and imaginal icons such as the increment (38) and decrement (38) arrows.

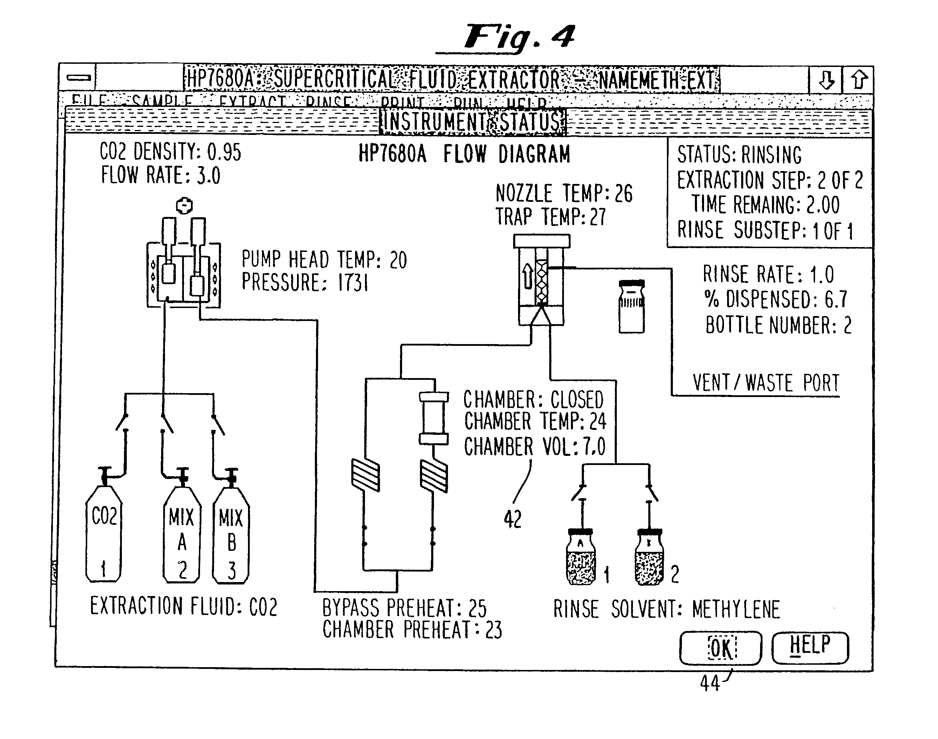

A user's ability to modify operational status information from a particular display screen is also controllable in accordance with the present invention. Thus, the user presented with the display of Figure 4 -- which is accessed by pointing to "Run" (28) on a screen such as shown in Figure 2, triggering the display of an associated menu, and selecting "Status" from this "Run" menu -- can monitor the status of, for example, the extraction chamber (42) but is unable to change the conditions thereof without first gaining access to an appropriate display -- such as by proceeding from this screen to one such as shown in Figure 2 via the "OK" button (44) -- and then either clicking on the colored region labeled "Extraction Chamber" (24) or by pointing to "Extract" (29) on a screen such as shown in Figure 2, triggering the display of an associated menu, and selecting "Extraction Chamber" from this "Extract" menu. Thus, it will be understood that a computer program written in accordance with this invention can limit a user's ability to control the operation of certain or all aspects of a mechanical device.

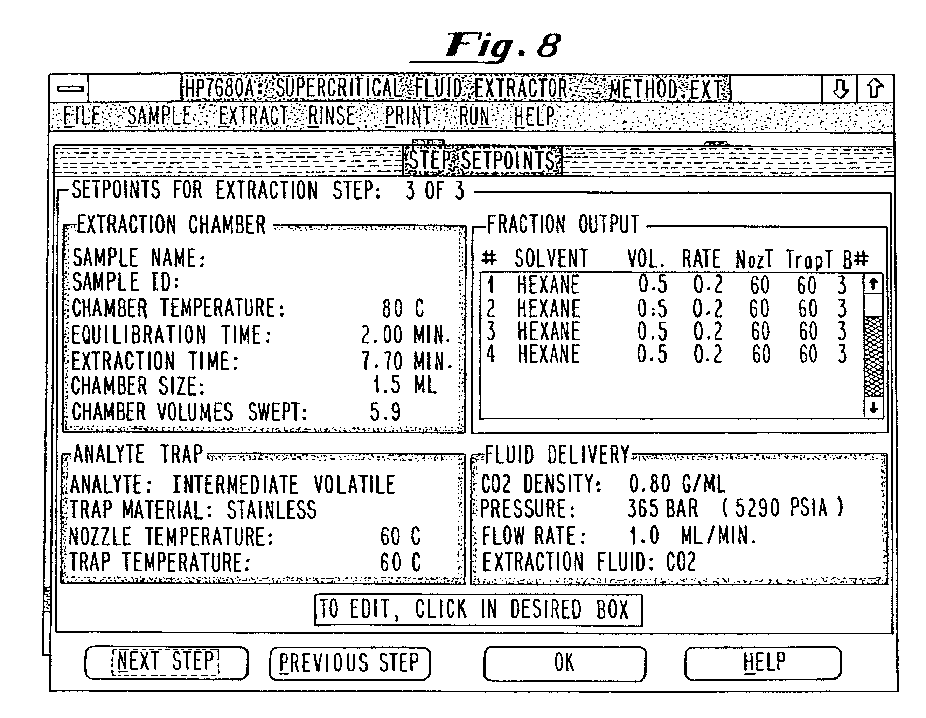

For certain embodiments, it is preferred that a display screen contain all pertinent operating parameters relating to a functional component of interest. The display of such information may be organized in various ways, although it is preferred that the display screen have an appearance similar to that depicted in Figures 2, 3, 4, 5, 6, 7, and 8, which relate to the operation of a supercritical fluid extractor. It is particularly preferred that a display screen comprise as much imaginal information as possible for a given application, and that alphanumeric information be kept to a minimum.

It will be appreciated that where a properly written Microsoft Windows™ program is employed, the displayed operating parameters may be modified by numerous techniques. For example, in Figure. 5, the units for sample amount (52) can be chosen by pointing to the increment arrow (54) with the mouse and then clicking the mouse one or more times. Alternatively, the user could point to the sample name inside the rectangular area (56) to input new information. As will be appreciated by those skilled in the art, such pointing and triggering at a particular area of the display screen will -- in conjunction with a properly written Microsoft Windows™ program -- effect the execution by the processing means of a particular subroutine associated with that area. Processing means amenable to the practice of this invention consist of a computing device such as the Hewlett-Packard Vectra QS20 or QS16 Personal Computer or any equivalent computing device capable of compiling and executing instructions. Preferred processing means further include one or more devices for the storage of data, such as magnetic disks or tape.

As will be appreciated by those skilled in the art, for the operational status of the mechanical device or its functional components to be accurately displayed, it will be necessary that some sort of appropriate sensor be present in the mechanical device. Such sensors detect a given condition, such as temperature, and convey this information to the computer so that it may be displayed on the display screen. Examples of suitable sensors are pressure sensors, optical sensors such as absorption, transmittance and fluorescence sensors, and electrodes which detect changes in, for example, pH and electric potential.

Likewise, for modification of an operating parameter to actually be implemented in the operation of the mechanical device, a driver must be present in that mechanical device to drive the device to the new, selected operational status. In the present invention, for example, drivers change fluid flow, dispense fluids, and change valve positions. It will be appreciated that there exist an exceedingly wide variety of drivers suitable for employment in the method and apparatus of this invention.

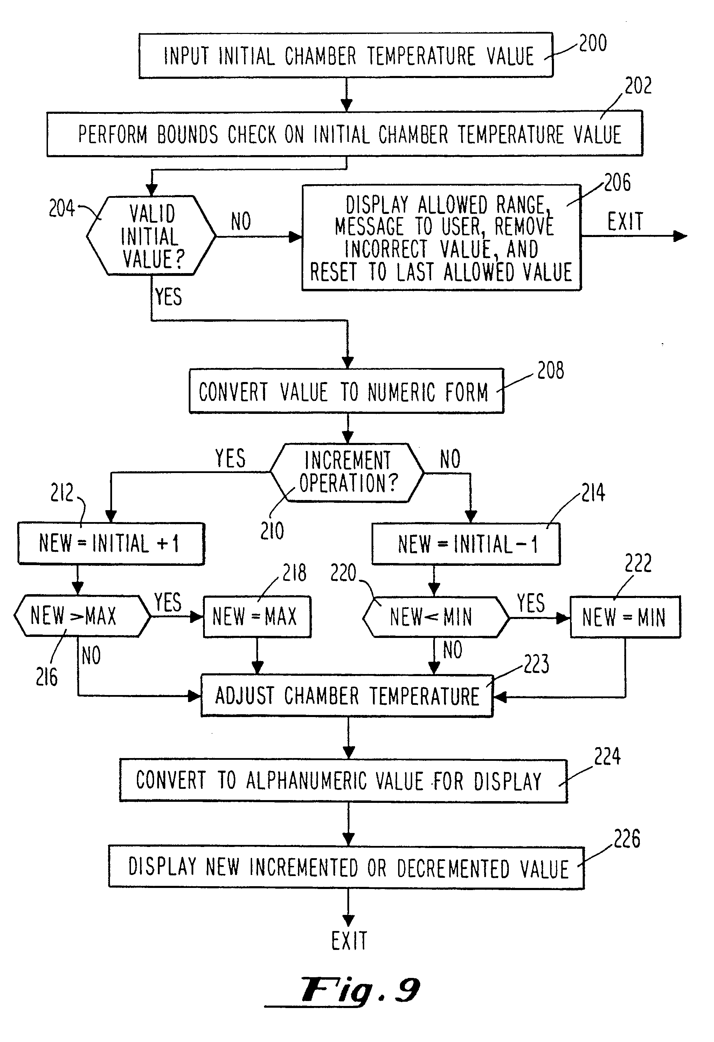

Turning now to Figure 9, application of the method of the present invention will now be described as it relates to the steps required in a Microsoft Windows™ program to increment or decrement the temperature of the extraction chamber of a supercritical fluid extractor. Initially, the "Extraction Chamber" display screen shown in Figure 6 would be accessed from the display screen shown in Figure 2 by pointing to the shaded portion depicting the extraction chamber (24) and thereupon clicking a mouse. It will be noted in Figure 6 that the increment (61) and decrement (62) icons are to the right of the associated parameter, "Chamber temperature" (63), its current value, "40" (64), and its units, degrees centigrade (C) (65).

The operations depicted in Figure 9 are performed upon the pre-existing contents of item (64), the current extraction chamber temperature. Thus, the current chamber temperature is input at step (200). Next, this initial value which is to be incremented or decremented is tested for suitability (202). This suitability test is in the form of a "bounds check" in which the initial value is compared to the allowed range of values for the parameter "Chamber temperature" (204). Since the allowed range is from 40 to 80, expressed in numeric digits, values such as 40, 61, or 79 would be deemed suitable and allowed; values such as -3, or 99 would not be allowed. Values outside the "allowed bounds" are detected when the starting value is examined and a warning issued to the user (206), reminding the user of the allowed range for "Chamber temperature"; the offending value is reset to the last "allowed" value. It should be noted that the "bounds check" and display operations take "Chamber temperature" as an alphanumeric value.

Once a value in the allowed range has been obtained, it is converted to a form suitable for numeric processing (208). If the increment operation was selected, the numerio value is increased by 1 (212) and then tested against the maximum allowable value (216). If the incremented value exceeds the maximum, it is reset to the maximum (218). Such a circumstance occurs when the user enters the allowed maximum initially (80 in this instance) or repeatedly invokes the increment operation. For the decrement operation, the initial numeric value is decremented by 1 (214) and tested against the minimum allowable value (220). If the decremented value falls below the minimum, it is reset to the minimum (222).

The temperature of the extraction chamber is then adjusted to agree with this incremented or decremented value. For example, if chamber temperature is incremented, electric current might be passed through a resistive heating coil until the chamber temperature reaches the incremented value. It will be understood that such adjustment may occur immediately or at some predetermined point in the future, possibly during a subsequent extraction step. Finally, the processed value is converted to alphanumeric form (224) and displayed for the user (226), as indicated by element (64) in Figure 6.

Those skilled in the art will appreciate that numerous changes and modifications may be made to the preferred embodiments of this invention and that such changes and modifications may be made without departing from the spirit of this invention. It is therefore intended that the appended claims cover all such equivalent variations as fall within the true spirit and scope of the invention.

## Claims

1. A method for computer-controlled operation of a mechanical device (10) having one or more functional components (e.g. 14), characterized by:

   displaying an imaginal depiction of said device (10) on a display screen;

pointing to a region (e.g. 20) on said display screen corresponding to a selected functional component (e.g. 14) of said device (10) having operational status;

triggering a display of the operational status for the selected functional component (e.g. 14); and

modifying laid operational status.

2. The method Of claim 1 wherein displaying an imaginal depiction of said device (10) is characterized by:

defining at least one region (e.g. 20) on the display screen; and

associating at least one defined region (e.g. 20) with at least one functional component (e.g. 14) such that actuation of the region (e.g. 20) executes one or more computer instruction sets

3. The method of claim 1 wherein triggering a display of the operational status for the selected functional component (e.g. 14) is characterized by:

defining at least one region (e.g. 20) on the display screen associated with the selected functional component (e.g. 14); and

determining the operational status for the functional component (e.g. 14).

4. The method of claim 1 further characterized by displaying the operational status as alphanumeric information on the display screen.

5. The method of claim 1 further characterized by displaying the operational status as imaginal information on the display screen.

6. The method of claim 1 further characterized by displaying the modified operational status on the display screen.

7. The method of claim 1 further characterized by storing the modified operational status on magnetic media.

8. An apparatus for computer-controlled operation of a mechanical device (10) having one or more functional components (e.g. 14) by reference to an imaginal depiction of said device (10) on a display screen, characterized by:

display means (8) for displaying alphanumeric and imaginal data on a display screen;

pointing means (e.g. 6) for pointing to regions of the display screen corresponding to functional components (e.g. 14) of interest having operational status;

triggering means (e.g. 6) for triggering a display of the operational statue of one or more of the functional components (e.g. 14) ; and

modifying means (e.g. 6) for modifying said operational status.

9. The apparatus of claim 8 wherein the device (10) separates chemical compounds.

10. The apparatus of claim 8 wherein the device (10) is a supercritical fluid extractor.

**Fig. 1**

*Fig. 2*

EP 0 444 251 A2

Fig.3

EP 0 444 251 A2

## Fig. 4

HP7680A: SUPERCRITICAL FLUID EXTRACTOR — NAMEMETH.EXT

FILE  SAMPLE  EXTRACT  RINSE  PRINT  RUN  HELP

INSTRUMENT STATUS

CO2 DENSITY: 0.95
FLOW RATE: 3.0

HP7680A  FLOW DIAGRAM

NOZZLE TEMP: 26
TRAP TEMP: 27

STATUS: RINSING
EXTRACTION STEP: 2 OF 2
TIME REMAING: 2.00
RINSE SUBSTEP: 1 OF 1

PUMP HEAD TEMP: 20
PRESSURE: 1731

RINSE RATE: 1.0
% DISPENSED: 6.7
BOTTLE NUMBER: 2

VENT / WASTE PORT

CHAMBER: CLOSED
CHAMBER TEMP: 24
CHAMBER VOL: 7.0

42

CO2  MIX A  MIX B
1    2     3

EXTRACTION FLUID: CO2

BYPASS PREHEAT: 25
CHAMBER PREHEAT: 23

1    2

RINSE SOLVENT: METHYLENE

OK  HELP

44

EP 0 444 251 A2

*Fig. 5*

EP 0 444 251 A2

EP 0 444 251 A2

HP7680A: SUPERCRITICAL FLUID EXTRACTOR — METHOD.EXT

FILE  SAMPLE  EXTRACT  RINSE  PRINT  RUN  HELP

EXTRACTION CHAMBER

EXTRACTION STEP:  1  OF 1

SAMPLE INFORMATION

SAMPLE NAME: PARSLEY AND NILE RED

SAMPLE ID:  0001

CHAMBER TEMPERATURE:  40  C

EQUILIBRATION TIME:  0.50  MIN.

EXTRACTION TIME:  10.00  MIN.

CHAMBER SIZE:  ○ 1.5 ML  ⊙ 7 ML

CHAMBER VOLUMES SWEPT:  1.7

ANALYTE T

EXTRACTION CHAMB

ACTIVE STEP (OF 1)

EXTRACTION STEP 1

FLUIDS

ELP

OK    CANCEL    HELP

**Fig. 6**

EP 0 444 251 A2

HP7680A: SUPERCRITICAL FLUID EXTRACTOR — METHOD.EXT

FILE  SAMPLE  EXTRACT  RINSE  PRINT  RUN  HELP

FLUID DELIVERY                    ENTS

EXTRACTION STEP:    1  OF  1

EXTRACTION FLUID:  CO2

FLOW RATE:                    1.4  ML/MIN.

CO2 DENSITY:                  0.75  G/ML

CHAMBER TEMPERATURE:  80 C
PRESSURE: 4400 PSIG  OR 303 BAR
NUMBER OF CHAMBER VOLUMES SWEPT: 5.8

OK      CANCEL      HELP

ACTIVE STEP (OF 1)

EXTRACTION STEP  1

EXTRACTION FLUIDS

FRACTION OUTPUT

FLUID DELIVERY

USING HELP

SAMPLE LOGIN

Fig. 7

## _Fig. 8_

FILE   SAMPLE   EXTRACT   RINSE   PRINT   RUN   HELP

STEP SETPOINTS

SETPOINTS FOR EXTRACTION STEP:   3 OF 3

EXTRACTION CHAMBER

SAMPLE NAME:
SAMPLE ID:
CHAMBER TEMPERATURE:               80 C
EQUILIBRATION TIME:             2.00 MIN.
EXTRACTION TIME:                7.70 MIN.
CHAMBER SIZE:                     1.5 ML
CHAMBER VOLUMES SWEPT:             5.9

FRACTION OUTPUT

| # | SOLVENT | VOL. | RATE | NozT | TrapT | B# |
|---|---------|------|------|------|-------|----|
| 1 | HEXANE  | 0.5  | 0.2  | 60   | 60    | 3  |
| 2 | HEXANE  | 0:5  | 0.2  | 60   | 60    | 3  |
| 3 | HEXANE  | 0.5  | 0.2  | 60   | 60    | 3  |
| 4 | HEXANE  | 0.5  | 0.2  | 60   | 60    | 3  |

ANALYTE TRAP

ANALYTE:  INTERMEDIATE VOLATILE
TRAP MATERIAL: STAINLESS
NOZZLE TEMPERATURE:                60 C
TRAP TEMPERATURE:                  60 C

FLUID DELIVERY

CO2 DENSITY:      0.80 G/ML
PRESSURE:         365 BAR   ( 5290 PSIA )
FLOW RATE:        1.0  ML/MIN.
EXTRACTION FLUID: CO2

TO EDIT, CLICK IN DESIRED BOX

[ NEXT STEP ]   [ PREVIOUS STEP ]   [ OK ]   [ HELP ]

EP 0 444 251 A2

INPUT INITIAL CHAMBER TEMPERATURE VALUE — 200

PERFORM BOUNDS CHECK ON INITIAL CHAMBER TEMPERATURE VALUE — 202

204 — VALID INITIAL VALUE? — NO → DISPLAY ALLOWED RANGE, MESSAGE TO USER, REMOVE INCORRECT VALUE, AND RESET TO LAST ALLOWED VALUE — 206 EXIT →

YES

CONVERT VALUE TO NUMERIC FORM — 208

YES ← INCREMENT OPERATION? → NO

210

212 — NEW = INITIAL + 1

214 — NEW = INITIAL − 1

NEW > MAX — YES → NEW = MAX — 218

216 NO

220 — NEW < MIN — YES → NEW = MIN — 222

NO

223 — ADJUST CHAMBER TEMPERATURE

CONVERT TO ALPHANUMERIC VALUE FOR DISPLAY — 224

DISPLAY NEW INCREMENTED OR DECREMENTED VALUE — 226

EXIT

*Fig. 9*